# EUROPÄISCHE PATENTSCHRIFT

(11) **EP 2 238 367 B1**
(45) Veröffentlichungstag und Bekanntmachung des Hinweises auf die Patenterteilung: **28.09.2011**
(21) Anmeldenummer: 08863353.2
(22) Anmeldetag: 02.12.2008
(51) Int. Cl.: F16D 66/00, B60T 17/22

(54) **BREMSANLAGE FÜR EIN FAHRZEUG**
BRAKE SYSTEM FOR A VEHICLE
SYSTÈME DE FREINAGE POUR UN VÉHICULE

(30) Priorität: 14.12.2007 DE 202007017613 U
(43) Veröffentlichungstag der Anmeldung: 13.10.2010
(73) Patentinhaber: PEX Kabeltechnik GmbH, 71154 Nufringen (DE)
(72) Erfinder: KORECKI, Jörg, 71154 Nufringen (DE)
(74) Vertreter: Weiss, Peter
(86) Internationale Anmeldenummer: PCT/EP2008/010197
(87) Internationale Veröffentlichungsnummer: WO 2009/077075

(56) Entgegenhaltungen:
- EP-A- 1 151 875
- WO-A-98/29672
- DE-A1- 3 813 514
- DE-A1- 4 024 771
- DE-A1- 19 634 714

## Beschreibung

Die Erfindung betrifft eine Bremsanlage für ein Fahrzeug mit zumindest einem Bremsbelag, den ein Bremsverschleissanzeiger und ein Temperaturfühler zugeordnet sind, sowie ein Verfahren zum Überwachen einer Bremsanlage.

### STAND DER TECHNIK

Verschleissanzeiger für Bremsbeläge sind in vielfältiger Form und Ausführung bekannt und auf dem Markt. Sie dienen dazu, den Verschleiss der Bremsbeläge zu überwachen und möglichst früh dem Fahrer ein Signal zu übermitteln, dass die Bremsbeläge ausgetauscht werden sollen.

Dabei ist in der Regel dem Bremsbelag ein Verschleisskörper zugeordnet, in dem sich ein Kontaktelement, meist ein elektrischer Leiter, befindet. Wird die Oberfläche dieses Verschleisskörpers durch den Bremsgegenkörper abgeschliffen, trifft der Bremsgegenkörper nach einer vorgegebenen Verschleisstiefe auch auf das Kontaktelement, so dass über das Kontaktelement eine Meldung an die Fahrzeugkontrolle abgegeben wird, dass der Bremsbelag einen gewissen Verschleissgrad erreicht hat.

Die Übermittlung der Informationen des Bremsverschleissanzeigers und/oder Temperaturfühlers erfolgt, wie beispielsweise aus der DE 10 2006 059 785 bekannt. Dort ist eine Bremsanlage für ein Fahrzeug mit zumindest einem Bremsbelag gezeigt, dem ggf. zumindest ein Verschleissanzeiger zugeordnet ist, wobei der Bremsanlage und/oder dem Verschleissanzeiger zumindest ein Temperatursensor zugeordnet ist, wobei der zumindest eine Temperatursensor zumindest einem Kabelstrang eines Anzeigekabels zugeordnet ist.

Nachteilig an analoger Informationsübermittlung ist in der Regel, dass bei grösserem Materialeinsatz nur kleinere Datenmengen in längerer Zeit übermittelt werden können.

Des weiteren offenbart die DE 40 24 771 A1 ein Verfahren und eine Vorrichtung zur Überwachung der Temperatur der Bremsbelagssätze eines Kraftfahrzeugs. Dabei sind jedem Bremsbelag oder jeder Bremsscheibe Temperatursensoren zugeordnet. Diese sind in Reihe geschaltet und erzeugen ein analoges Signal. Das Signal wird digitalisiert und zur Ausgabe von Warnsignalen verwendet.

### AUFGABE

Der vorliegenden Erfindung liegt die Aufgabe zugrunde, dass Informationen des Bremsverschleissanzeigers und/oder des Temperaturfühlers besser übertragen werden.

### LÖSUNG DER AUFGABE

Zur Lösung der Aufgabe führen die Merkmale des kennzeichnenden Teils des Anspruch 1.

Der Bremsanlage ist eine Zwischenstation zugeordnet, die analoge Informationen des Temperaturfühlers und des Bremsverschleissanzeigers in digitale Informationen umwandelt.

Die für die einzelnen Komponenten verwandten Materialien entsprechen marktüblichen Standards.

Mit der Bezeichnung der einzelnen Komponenten als z.B. Trailer Interface Modul soll keine Einschränkung nur auf diese Art von Local Interconnect Network Interfaces stattfinden. Vielmehr steht im Zentrum des Erfindungsgedankens die Umwandlung von analogen Informationen in digitale Informationen. In welcher Weise die weitere Nutzung erfolgt, soll bewusst offen gelassen werden, da eine zukünftige Entwicklung nicht absehbar ist.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Figur 1: ein Blockschaltbild einer erfindungsgemässen Bremsanlage;
- Figur 2: einen Ausschnitt aus dem Blockschaltbild nach Figur 1;
- Figur 3: ein weiteres Ausführungsbeispiel des Ausschnitts nach Figur 2.

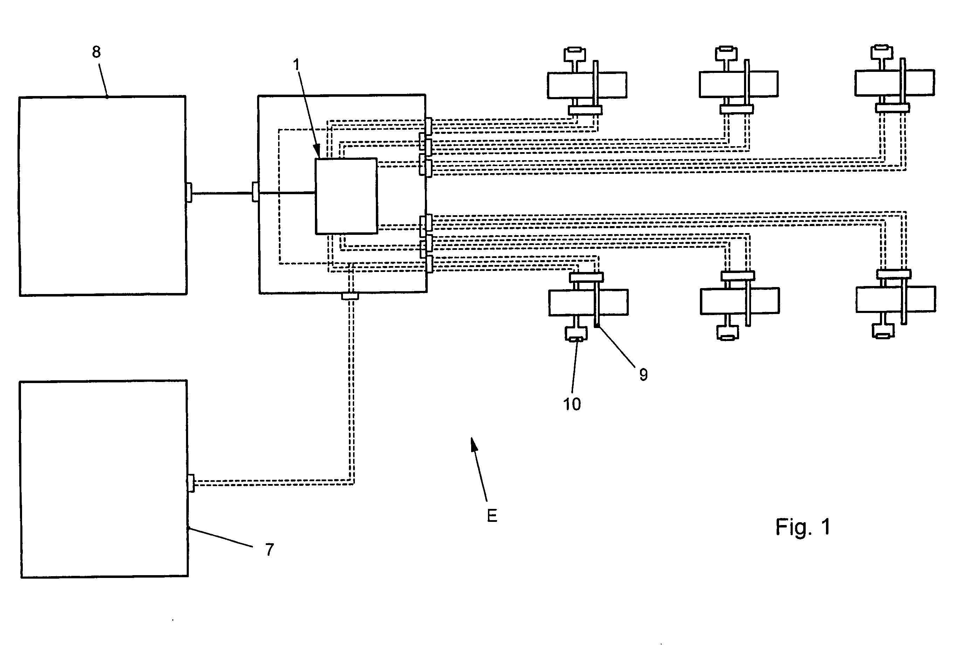

Figur 1 zeigt das Blockschaltbild einer Bremsanlage E. Dort sind sechs Bremsverschleissanzeiger 9 zu erkennen, wobei jedem ein Temperaturfühler 10 zugeordnet ist.

Die Bremsverschleissanzeiger 9 sind mit einem Elektronischen Bremssystem 7 verbunden. Hier verläuft die Übermittlung der Daten auf analogem Wege. Die Verbindung zwischen den Bremsverschleissanzeiger 9 und dem Elektronischen Bremssystem 7 ist daher als gestrichelte Linie dargestellt, wobei die einzelnen Bremsverschleissanzeiger 9 in Reihe geschaltet sind.

Die Temperaturfühler 10 sind hingegen mit einer Zwischenstation 1 verbunden. Die Übermittlung der Daten zwischen diesen Stationen verläuft ebenfalls analog, so dass eine Verbindung auch als gestrichelte Linie dargestellt ist.

Von dieser Zwischenstation 1 verläuft eine Verbindung zu einem Trailer Interface Modul 8. Die Verbindung zwischen der Zwischenstation 1 und dem Trailer Interface Modul 8 wird durch einen Local Interconnect Network - Bus gewährleistet. Die Übermittlung der Daten erfolgt digital. Diese Verbindung ist hier als durchgehende Linie dargestellt.

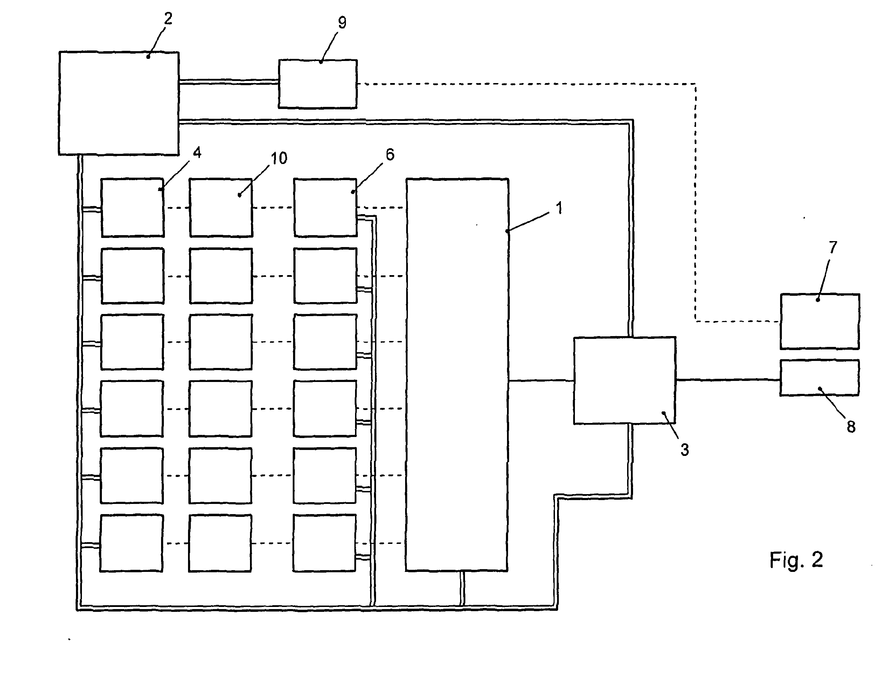

Figur 2 zeigt ein Blockschaltbild eines Ausschnitts von Figur 1. Hier ist wiederum gut zu erkennen, wie der Bremsverschleissanzeiger 9 mit dem elektronischen Bremssystem 7 verbunden ist. Die Übermittlung der Daten erfolgt hier analog. Daher ist diese Verbindung gestrichelt dargestellt.

Daneben ist der Bremsverschleissanzeiger 9 mit einer Batterie 2 ausgeschlossen. Diese Verbindung ist in Figur 2 als Doppellinie dargestellt.

Über die Batterie 2 und jeweils einen Stromgenerator 4 sind die sechs Temperaturfühler 10 über einen Verstärker 6 mit der als Converter ausgebildeten Zwischenstation 1 verbunden. Die Informationsübermittlung erfolgt in analoger Weise. Dies ist an der gestrichelten Darstellung zu erkennen.

Nachdem die Informationen in die Zwischenstation 1 gelangt sind, werden sie dort in digitale Informationen umgewandelt und werden nun von der Zwischenstation 1 in digitalisierter Form zu einer Local Interconnect Network Interface 3 übertragen, was als durchgehende Linie dargestellt ist. Von dort aus gelangen sie weiterhin digitalisiert zum Trailer Interface Modul 8 bzw. zu einem Master Local Interconnect Network Interface.

Die Batterie 2 versorgt die Zwischenstation 1 und das LIN Interface 3 mit der notwendigen elektrischen Energie.

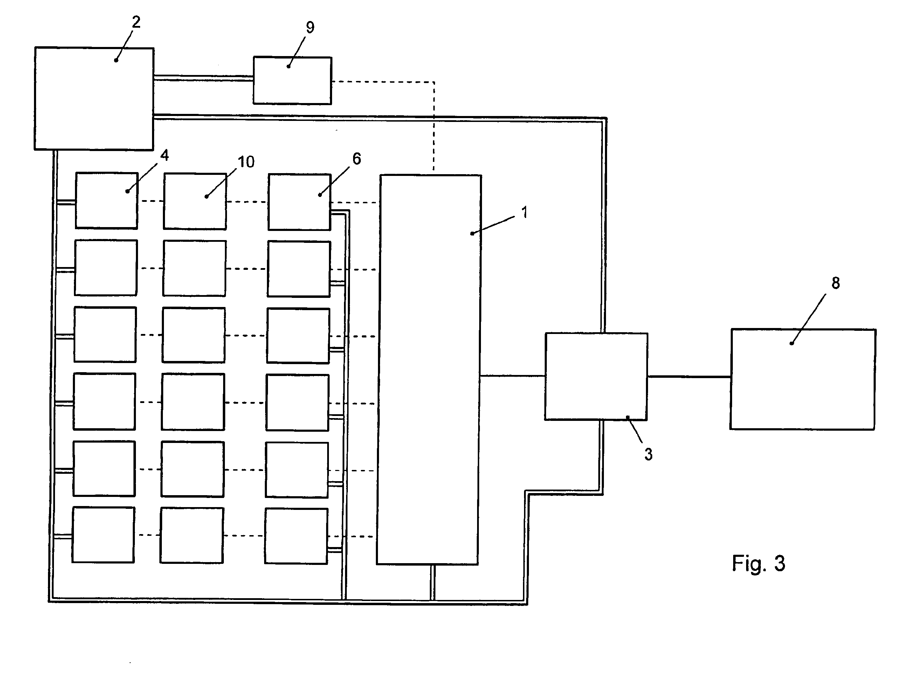

Figur 3 zeigt ein Teil eines Blockschaltbilds eines weiteren Ausführungsbeispiels einer erfindungsgemässen Bremsanlage. Dort ist wiederum ein Bremsverschleissanzeiger 9 zu erkennen. Dieser Bremsverschleissanzeiger 9 übermittelt analoge Informationen allerdings zur Zwischenstation 1. Dies ist gestrichelt dargestellt. Dort werden die analogen Informationen in digitale Informationen umgewandelt. Anschliessend werden die Informationen digitalisiert zum Local Interconnect Network Interface 3 gesandt. Diese Verbindung ist als durchgehende Linie dargestellt.

### Bezugszeichenliste

| | | | | | |
|---|---|---|---|---|---|
| 1 | Zwischenstation (Converter) | 34 | | 67 | |
| 2 | Batterie | 35 | | 68 | |
| 3 | LIN Interface | 36 | | 69 | |
| 4 | Stromgenerator | 37 | | 70 | |
| 5 | | 38 | | 71 | |
| 6 | Verstärker | 39 | | 72 | |
| 7 | Elektr. Bremssystem | 40 | | 73 | |
| 8 | Trailer Interface Modul | 41 | | 74 | |
| 9 | Bremsverschleissanzeiger | 42 | | 75 | |
| 10 | Temperaturfühler | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | E | Bremssystem |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Bremsanlage für ein Fahrzeug, mit zumindest einem Bremsbelag, dem ein Bremsverschleissanzeiger (9) und ein Temperaturfühler (10) zugeordnet sind,
**dadurch gekennzeichnet,**
**dass** der Bremsanalage eine Zwischenstation (1) zugeordnet ist, die analoge Informationen des Temperaturfühlers (10) und/oder des Bremsverschleissanzeigers (9) in digitale Informationen umwandelt.

2. Bremsanlage nach Anspruch 1, **dadurch gekennzeichnet, dass** die digitalen Informationen des Zwischenspeichers (1) zu einem Local Interconnect Network Interface (3) geleitet werden.

3. Bremsanlage nach Anspruch 1 oder 2, **dadurch gekennzeichnet, dass** die digitalen Informationen des Zwischenspeichers (1) zu einem Local Interconnect Network Master Interface oder einem Trailer Interface Modul (8) geleitet werden.

4. Verfahren zum Überwachen in einer Bremsanlage für ein Fahrzeug, mit zumindest einem Bremsbelag, dem ein Bremsverschleissanzeiger (9) und ein Temperaturfühler (10) zugeordnet sind, **dadurch gekennzeichnet, dass** analoge Informationen des Temperaturfühlers (10) und/oder des Bremsverschleissanzeigers (9) in digitale Informationen umgewandelt werden.

## Claims

1. A braking system for a vehicle, with at least one brake lining with which a brake wear indicator (9) and a temperature sensor (10) are associated,
**characterised in that**
an intermediate station (1) is associated with the braking system, which intermediate station converts analogue information of the temperature sensor (10) and/or of the brake wear indicator (9) into digital information.

2. A braking system according to Claim 1, **characterised in that** the digital information of the intermediate store (1) is passed to a Local Interconnect Network Interface (3).

3. A braking system according to Claim 1 or 2, **characterised in that** the digital information of the intermediate store (1) is passed to a Local Interconnect Network Master Interface or a Trailer Interface Module (8).

4. A method for monitoring in a braking system for a vehicle, with at least one brake lining with which a brake wear indicator (9) and a temperature sensor (10) are associated, **characterised in that** analogue information of the temperature sensor (10) and/or of the brake wear indicator (9) is converted into digital information.

## Revendications

1. Système de freinage pour un véhicule avec au moins une garniture de frein, auquel sont associés un indicateur d'usure de frein (9) et un capteur de température (10),
**caractérise par le fait**
**qu'**au système de freinage est associé un poste intermédiaire (1) transformant les informations analogiques du capteur de température (10) et/ou de l'indicateur d'usure de frein (9) en informations numériques.

2. Système de freinage selon la revendication 1, **caractérisé par le fait que** les informations numériques de la mémoire intermédiaire (1) sont transmises à une Interface de Réseau d'Interconnexion Locale (3).

3. Système de freinage selon la revendication 1 ou 2, **caractérisé par le fait que** les informations numériques de la mémoire intermédiaire (1) sont transmises à une Interface de Réseau d'Interconnexion Locale ou à un Module d'Interface de Remorque (8).

4. Procédé de contrôle dans un système de freinage pour un véhicule avec au moins une garniture de frein, auquel sont associés un indicateur d'usure du frein (9) et un capteur de température (10), **caractérisé par le fait que** les informations analogiques du capteur de température (10) et/ou de l'indicateur d'usure du frein (9) sont transformées en informations numériques.
